# EUROPEAN PATENT APPLICATION

(11) **EP 3 441 572 A1**
(43) Date of publication of application: **13.02.2019**
(21) Application number: 18175131.4
(22) Date of filing: 30.05.2018
(51) Int. Cl.: F01D 5/26, F01D 5/16, G01H 1/00

(54) **TURBINE BLADE MAXIMUM RESPONSE PREDICTION METHOD, TURBINE BLADE MAXIMUM RESPONSE PREDICTION SYSTEM AND CONTROL PROGRAM, AND TURBINE EQUIPPED WITH TURBINE BLADE MAXIMUM RESPONSE PREDICTION SYSTEM**

(30) Priority: 01.06.2017 JP 2017109550
(71) Applicant: Mitsubishi Hitachi Power Systems, Ltd., Yokohama-shi, Kanagawa 220-8401 (JP)
(72) Inventor: NAKAJIMA, Tomomi, Yokohama-shi,, Kanagawa 220-8401 (JP)
(74) Representative: MERH-IP Matias Erny Reichl Hoffmann Patentanwälte PartG mbB

(57) **Abstract**

To provide a turbine blade maximum response prediction method, a turbine blade maximum response prediction system, a turbine equipped therewith, and a control program making it possible to predict and evaluate the vibration response of all the moving blades even in a case where it is impossible to measure the vibration response of all the moving blades.

A turbine blade maximum vibration response prediction method for predicting a maximum vibration response acting on a plurality of turbine moving blades 1 provided along the circumferential direction of a turbine rotor 6 includes the steps of: gaining, before turbine operation start, prior response data that is distribution data on vibration response of all the turbine moving blades 1 for each turbine operating condition; gaining, by using the prior response data, operation response data that is distribution data on the vibration response of all the turbine moving blades 1 during the operation of the turbine; and predicting, from the operation response data, the turbine moving blade 1 of all the turbine moving blades 1 on which the maximum vibration response is acting, and the magnitude of the maximum vibration response.

## Description

### BACKGROUND OF THE INVENTION

### 1. Field of the Invention

The present invention relates to a turbine blade maximum response prediction method for predicting the maximum response of a turbine blade during turbine operation, a turbine blade maximum response prediction system and control program, and a turbine equipped with a turbine blade maximum response prediction system.

### 2. Description of the Related Art

A turbine such as a steam turbine or a gas turbine contains within a casing a turbine rotor into which a turbine moving blade (bucket) is incorporated. Generally speaking, in such a turbine, a stage is formed by a plurality of moving blades arranged along the circumferential direction of the turbine rotor and a plurality of stator vanes (nozzles) arranged along the circumferential direction of the casing, with a plurality of stages being arranged in the axial direction of the turbine rotor.

In the case of the moving blades of the steam turbine, of the plurality of stages, the stage group (last blade group) situated on the downstream side (low pressure side) in the flowing direction of the working fluid greatly affects the output of the turbine as a whole, so that it needs to be controlled to perform a sound operation. The moving blade of the last blade group has a larger blade length as compared with the moving blades constituting the stage group situated on the upstream side (high pressure side) in the flowing direction of the working fluid, and the rigidity of the blades is lower. Thus, when excited, the vibration displacement is liable to increase. Further, around the moving blades of the last blade group, disturbance in the flow is likely to be generated due to a change in degree of vacuum, pressure, or the like of an exhaust chamber provided on the downstream side thereof, with the result that the moving blades of the last blade group are subject to excitation.

Further, generally speaking, within the manufacturing tolerance, due to variation in the machining and variation in the material characteristic, the plurality of moving blades constituting the stage group do not exhibit the same weight and natural frequency per blade. In addition, due to the difference in dimension, deviation at the time of assembly, etc., within the tolerance, the plurality of moving blades constituting the stage group involve variation in the size of the gap between the contact surfaces. A blade involving such variation is referred to as a mistuned blade, and a blade involving no variation is referred to as a tuned blade. Due to mistuning, variation is generated in the response of all the blades of the entire impeller. Generally speaking, a mistuned blade tends to increase in vibration response and displacement (hereinafter collectively referred to as response as appropriate) as compared with a tuned blade. In some cases, however, the degree of influence on the vibration response due to the mistuning effect varies depending not only on the blade structure such as the blade configuration and design tolerance, but also on the kind of vibration mode generated in the blade. From the practical point of view, it is difficult to grasp and control all the factors influencing mistuning. Thus, it is difficult to quantitatively obtain the vibration response of the blades of the stage formed by mistuned blades through calculation. Accordingly, it is difficult to quantitatively predict the vibration response of the blade beforehand. That is, even in a stage formed by using blades manufactured by the same design method in the same configuration, the vibration response distribution and the maximum value of the vibration response of the entire blades can vary from manufacture to manufacture.

It is to be assumed that the main factor of the mistuning effect affecting the vibration response of the moving blades is variation in the contact surfaces of the moving blades and the turbine rotor. Generally speaking, the moving blades are incorporated into the turbine rotor via a groove portion provided in the turbine rotor, and, at the time of rotation of the turbine rotor, are constrained in the radial direction due to the centrifugal force. Most of the last blade groups are of a structure in which each of the moving blades is connected with adjacent one in the circumferential direction of the turbine rotor by a cover, a tie wire, a tie boss, etc. In some cases, however, they are constrained at a predetermined position at the time of rotation of the turbine rotor, enhancing the rigidity and attenuation and varying the natural frequency. The condition of the moving blades at the time of rotation of such a turbine rotor involves variation from manufacture to manufacture and is not uniform. Furthermore, it is difficult to grasp the details of the condition of the moving blades without actually rotating the turbine rotor. Thus, it is difficult to predict the vibration response of the moving blades at the time of rotation of the turbine rotor solely from their condition and measurement values when they are still.

In view of the above, there exists a technique according to which with respect to the moving blades of the last blade group in the actual flow, the vibration response, vibration displacement, natural frequency, etc. during the operation of the turbine are measured to evaluate the soundness of the moving blades. Roughly speaking, there are two measurement methods. One is measurement by a strain gage utilizing a telemeter, and the other is measurement utilizing a non-contact sensor (hereinafter referred to as the sensor as appropriate).

In the measurement by the strain gage, it is possible to perform the measurement by a strain gage directly attached to the moving blade, so that it is possible to attain a highly accurate value. From the viewpoint of cost and time, however, it is not realistic to attach strain gages to all the blades. Thus, it is impossible to obtain information on the moving blades other than those to which strain gages are attached (that is, the moving blades to which no strain gages are attached). Further, there is a limitation to the capacitance of the battery for transmitting data from the rotary body side to the stationary body side, so that, in the measurement utilizing a strain gage, it is difficult to measure and monitor the moving blades over a long period of time. On the other hand, in the measurement utilizing a sensor, the sensor is mounted to the stationary body side such as a casing and diaphragms, so that it is possible to secure the power source in a stable manner, and, by using a sensor of high durability, it is possible to measure the moving blades over a long period of time. Further, it is possible to gain information on all the blades passing the position facing the sensor. In some cases, however, the measurement utilizing the strain gage and the measurement utilizing the sensor are not applicable to an actual plant depending on the structural problems and circumstances such as processes.

As a method of securing the reliability of the moving blades, a method is available according to which the maximum stress of the moving blade is predicted based on the difference in pressure between both sides of the moving blade (see JP-2011-163862-A (hereinafter, referred to as Patent Document 1), etc.). Further, there is a method according to which, in order to accurately estimate the response of all the blades due to mistuning, data on the vibration mode distribution gained by striking the blades in a static place at the natural frequency of the actual blades and data on the vibration mode distributions gained through numerical analysis of the tuned blades are compared with each other, and a plurality of vibration mode distributions gained through numerical analysis of the tuned blades are superimposed one upon the other to reproduce the vibration mode distribution of the actual blades, predicting the vibration stress distribution of the actual blades (see JP-2001-324420-A (hereinafter, referred to as Patent Document 2), etc.). Further, according to another method, variation in the moment arrangement and natural frequency by the mistuning effects is utilized to reduce the vibration stress (see Japanese Patent No. 3272088 (hereinafter, referred to as Patent Document 3), etc.).

The method of Patent Document 1 can predict the maximum stress of the moving blade without having to measure the response of the moving blade. However, the method of

Patent Document 1 cannot predict the response distribution of all the blades with the pressure difference between both sides of the moving blade alone, and further, cannot predict the response distribution and the response maximum value of all the blades, which differ from manufacture to manufacture. The method of Patent Document 2 utilizes the vibration mode in a static place. In the last blade group of the moving blades, a structure is utilized in which the blades are connected to each other by a cover, a tie boss, a tie wire, etc. Particularly, in this structure, the vibration mode can vary in the rotary place, so that it is difficult to quantitatively grasp the requisite vibration characteristics. The method of Patent Document 3 utilizes the measurement result of the natural frequency after the completion of the machining. A vibration mode with nodes generated through continuation with a disk is hardly generated. The method of Patent Document 3, however, seems to be little effective for a moving blade of large blade length, in which the effect of the disk with respect to the vibration mode is likely to be diminished. Further, the method of Patent Document 3 cannot quantitatively evaluate the vibration response of all the blades.

### SUMMARY OF THE INVENTION

The present invention has been made in view of the above problems. It is an object of the present invention to provide a turbine blade maximum response prediction method, a turbine blade maximum response prediction system, a turbine equipped therewith, and a control program making it possible to predict and evaluate the vibration response of all the moving blades even in a case where it is impossible to measure the vibration response of all the moving blades.

To achieve the above object, the present invention provides a turbine blade maximum vibration response prediction method for predicting a maximum vibration response acting on a plurality of turbine moving blades provided along a circumferential direction of a turbine rotor, the method including: gaining, before turbine operation start, prior response data that is distribution data on vibration response of all the turbine moving blades for each turbine operating condition; gaining, by using the prior response data, operation response data that is distribution data on the vibration response of all the turbine moving blades during operation of the turbine; and/or predicting, from the operation response data, a turbine moving blade which is one of all the turbine moving blades and on which the maximum vibration response is acting, and magnitude of the maximum vibration response.

According to the present invention, even in the case where the vibration response of all the moving blades cannot be measured, it is possible to predict and evaluate the vibration response of all the moving blades.

### BRIEF DESCRIPTION OF THE DRAWINGS

Fig. 1 is a schematic diagram illustrating a structural example of moving blades of a steam turbine according to a first embodiment of the present invention;
Fig. 2 is a schematic diagram illustrating moving blades of a steam turbine according to the first embodiment of the present invention as seen along the circumferential direction of a turbine rotor together with a section of a stationary body;
Fig. 3 is a diagram illustrating an example of the distribution of a vibration response of a moving blade to which the present invention is applied;
Fig. 4 is a diagram illustrating an example of the distribution of the vibration response of a tuned blade;
Fig. 5 is a diagram illustrating an example of the distribution of the vibration response of a mistuned blade;
Fig. 6 is a diagram illustrating the distribution of vibration response of a moving blade according to the first embodiment of the present invention;
Fig. 7 is a diagram illustrating the distribution of vibration response of a moving blade according to a modification of the first embodiment of the present invention;
Fig. 8 is a flowchart illustrating the procedures of a maximum response prediction method according to the first embodiment of the present invention;
Fig. 9 is a diagram illustrating the functional blocks of a maximum response prediction system according to the first embodiment of the present invention;
Fig. 10 is a schematic diagram illustrating a computer for realizing the processing by the maximum response prediction system according to the first embodiment of the present invention;
Fig. 11 is a diagram illustrating the relationship between the distribution of the vibration response of a moving blade to which the present invention is applied and the distribution of a natural frequency;
Fig. 12 is a flowchart illustrating the procedures of a maximum response prediction method according to a second embodiment of the present invention; and
Fig. 13 is a flowchart illustrating the procedures of a maximum response prediction method according to a third embodiment of the present invention.

### DESCRIPTION OF THE PREFERRED EMBODIMENTS

### [First Embodiment]

### (Structure)

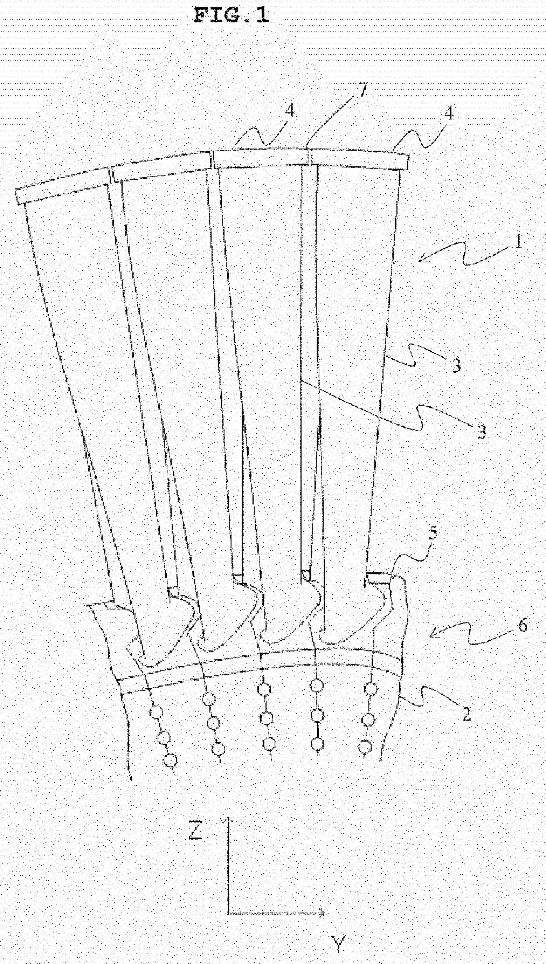

Fig. 1 is a schematic diagram illustrating a structural example of moving blades of a steam turbine according to a first embodiment of the present invention. In the following, to be described will be a structure in which the present invention is applied to the moving blades of a steam turbine.

As shown in Fig. 1, a moving blade 1 is incorporated into a groove portion 2 provided in a turbine rotor 6. A plurality of moving blades 1 are provided in the outer circumferential portion of the turbine rotor 6 along the circumferential direction of the turbine rotor 6, forming a moving blade row. The moving blade 1 is equipped with a blade portion 3 and a cover portion 4. The blade portion 3 extends from the outer circumferential portion of the turbine rotor 6 to the outer side in the radial direction of the turbine rotor 6 (in the direction of the arrow Z in Fig. 1). The cover portion 4 is provided at the outer circumferential portion in the blade length direction of the blade portion 3. The plurality of moving blades 1 constituting the moving blade row are in contact with the moving blade adjacent thereto in the circumferential direction (the direction of the arrow Y in Fig. 1) of the turbine rotor 6 (the adjacent blade) at a contact portion 7 in the cover portion 4 and a contact portion 5 in the groove portion. On the upstream side in the flowing direction of the working fluid with respect to the moving blades 1, there is arranged a stator vane row provided with a plurality of stator vanes (not shown). In the present embodiment, the present invention is applied to the moving blades constituting the moving blade row arranged on the downstream side of the stator vane row in the flowing direction of the working fluid of the steam turbine. That is, in the present invention, one moving blade row consisting of a plurality of moving blades fixed to one impeller in the circumferential direction of the turbine rotor is a unit of application. Hereinafter, the term "all the blades" means all the moving blades constituting one moving blade row fixed to one impeller.

In the present embodiment, the plurality of moving blades 1 are connected together (an entire periphery connection blade structure) by, for example, a method in which a pressing force is exerted on the contact portions 7 of the cover portions 4 of the adjacent blades by mounting the blade portion 3 in a previously twisted state to keep them constantly in contact with each other or a method in which a pressing force is exerted on the contact portions 7 of the cover portion 4 of the adjacent blades due to the twist return generated at the blade portions 3 due to the action of the centrifugal force at the time of rotation of the moving blades 1 to keep them in contact with each other solely during rotation. The present invention is applicable to various moving blades as follows: a structure in which the adjacent blades are connected by a tie boss installed at the blade portion; a structure in which a hole is formed in the blade portion and several or all the blades are connected together by a tie wire inserted therein; or a free standing blade structure in which a blade is not connected to the adjacent blade.

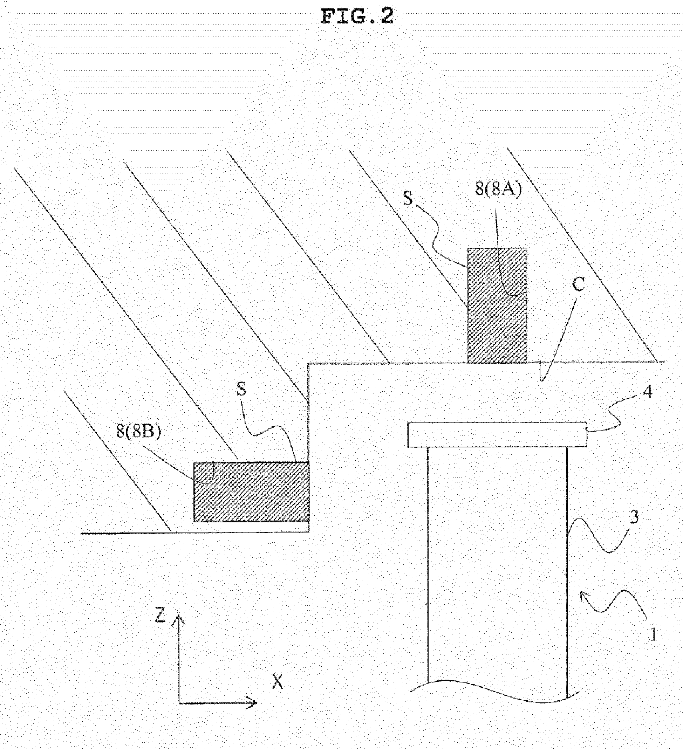

Fig. 2 is a schematic diagram illustrating moving blades of a steam turbine according to the present embodiment of the present invention as seen along the circumferential direction of a turbine rotor together with a section of a stationary body.

As shown in Fig. 2, in the case of a steam turbine provided in a power generation plant, a stationary body C is provided near the cover portion 4 of the moving blade 1. In the structure shown in Fig. 2, with respect to the cover portion 4 of the moving blade 1, there is provided the stationary body C on the outer circumferential side in the radial direction of the turbine rotor (the direction of the arrow Z in Fig. 2) and on the upstream side in the axial direction (the direction opposite the direction of the arrow X in Fig. 2). The stationary body C is, for example, a casing. When there is some other member provided on the outer circumferential side of the moving blade 1 (e.g., a diaphragm), that is also included by the stationary body C.

As shown in Fig. 2, in the present embodiment, the stationary body C is provided with an outer circumferential side hole portion 8A and an upstream side hole portion 8B as hole portions 8.

With respect to the cover portion 4 of the moving blade 1, the outer circumferential side hole portion 8A is provided in the stationary body C so as to be opposite the outer circumferential side in the radial direction of the turbine rotor. In the present embodiment, a plurality of outer circumferential side hole portions 8A are provided in the stationary body C along the circumferential direction of the turbine rotor.

With respect to the cover portion 4 of the moving blade 1, the upstream side hole portion 8B is provided in the stationary body C so as to be opposite the upstream side in the axial direction of the turbine rotor. Like the outer circumferential side hole portions 8A, in the present embodiment, a plurality of upstream side hole portions 8B are provided in the stationary body C along the circumferential direction of the turbine rotor. In the present embodiment, in the circumferential direction of the turbine rotor, the upstream side hole portions 8B are situated so as to correspond with the outer circumferential side hole portions 8A of the stationary body C.

While in the present embodiment described a plurality of outer circumferential side hole portions 8A and a plurality of upstream side hole portions 8B are provided in the stationary body C along the circumferential direction of the turbine rotor, one outer circumferential side hole portion 8A and one upstream side hole portion 8B may be provided in the stationary body C along the circumferential direction of the turbine rotor so long as it is possible to measure the behavior (e.g., the vibration response) of the moving blade 1. Alternatively, one or a plurality of either the outer circumferential side hole portions 8A or the upstream side hole portions 8B may be provided in the stationary body C along the circumferential direction of the turbine rotor. Further, while in the present embodiment described the upstream side hole portion 8B is provided in the stationary body C at a position corresponding with the outer circumferential side hole portion 8A in the circumferential direction of the turbine rotor, it may also be provided at a position deviated from the outer circumferential side hole portion 8A.

The outer circumferential side hole portion 8A and the upstream side hole portion 8B each contain sensors S. The sensors S serve to measure the behavior of the moving blade 1 during the operation of the steam turbine. While in the present embodiment described the outer circumferential side hole portion 8A and the upstream side hole portion 8B each contain the sensors S, the sensor S may be contained only one of the outer circumferential side hole portion 8A and the upstream side hole portion 8B so long as it is possible to measure the behavior of the moving blade 1. That is, so long as it is possible to measure the behavior of the moving blade 1, there is no restriction to the number of sensors S provided in the stationary body C. It is possible to provide one or a plurality of sensors S.

As in the structure shown in Fig. 2, in many cases, the sensor S is installed on the outer side in the radial direction and on the upstream side in the axial direction of the turbine rotor with respect to the cover portion 4 of the moving blade 1. At both positions, it is necessary to perform machining on the stationary body C side (in the structure shown in Fig. 2, the stationary body C needs to be provided with the outer circumferential side hole portion 8A and the upstream side hole portion 8B). Further, in many cases, it is difficult to freely set the positional relationship between the sensor S and the moving blade 1, so that, in some cases, it is difficult to quantitatively measure the vibration response of the moving blade 1 by the sensor S. In an in-house verification test or the like, however, for example, in a rotation test or the like in a vacuum chamber, a foundation or the like constituting the stationary body side can be added relatively freely in many cases. By executing the measurement at an optimum position, it is advantageously easy to quantitatively gain the vibration response of all the blades.

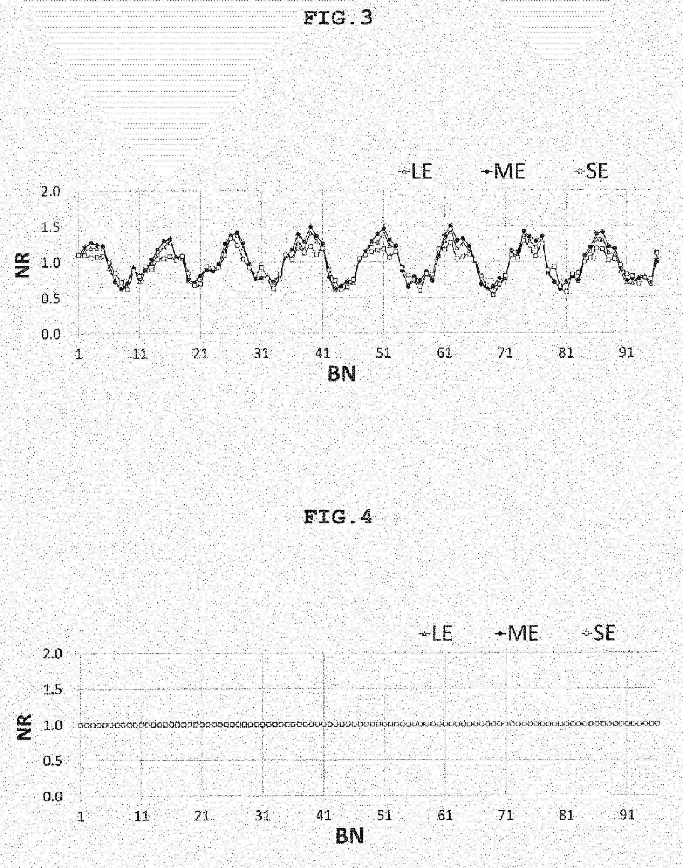

Fig. 3 is a diagram illustrating an example of the distribution of a vibration response of a moving blade to which the present invention is applied. The horizontal axis indicates the blade number BN, and the vertical axis indicates a value NR (hereinafter referred to as the response normalized value as appropriate) obtained by dividing the peak response (the peak value in vibration response) by the average value of the vibration response and normalizing it. The blade numbers BN are obtained through successive numbering of all the blades incorporated in the impeller in the circumferential direction of the turbine rotor. Lines SE, ME, and LE indicate the results of examinations performed with a low level exciting force (low exciting force), a medium level exciting force (medium exciting force), and a high level exciting force (high exciting force), respectively.

In the case of the entire periphery blade connection structure shown in Fig. 1, the vibration response is split in a mistuned blade, so that there are generated response crests in a number double the node diameter number with respect to the horizontal axis. In the present embodiment, the "node diameter number" means the number of node diameters which are lines connecting the vibration boundaries when a plurality of moving blades formed in an annular configuration vibrate (for example, in the case where the moving blades vibrate in the upstream and downstream sides in the axial direction of the turbine rotor, they are the boundaries between the moving blades displaced to the upstream side and the moving blades displaced to the downstream side). In the distribution of the vibration response shown in Fig. 3, the vibration mode is of a node diameter number of four, so that there are generated eight response crests, with the magnitude of the vibration response differing in accordance with the blade number BN.

Fig. 4 is a diagram illustrating an example of the distribution of the vibration response of a tuned blade. In Fig. 4, the same portions as those of Fig. 3 are indicated by the same reference characters, and a description thereof will be left out as appropriate.

As shown in Fig. 4, in the distribution of the vibration response of the tuned blades, the response normalization value NR is the same in all the blades. Thus, in the reliability evaluation of the actual blades (the moving blades provided on the turbine rotor), it is important to quantitatively grasp the difference in response normalization values between Figs. 3 and 4.

As shown in Fig. 3, when the distribution of the vibration response is normalized, the distribution of the vibration response is of the same configuration independently of the magnitude of the exciting force, and the relationship between the maximum value, the average value, and the minimum value is maintained. Further, the blade number NB on which the maximum vibration response acts is not changed. Basically, this nature is not changed in any of the plurality of moving blades incorporated into the impeller, and the distribution of the vibration response tends to be maintained under a specific operating condition. However, while this nature remains the same in the case of a plurality of moving blades incorporated into one impeller, the same tendency is not to be seen in the case of moving blades of a different mistuning effect, such as another impeller produced based on the same idea. That is, it is a nature peculiar to an impeller what vibration effect of what magnitude acts on what moving blade, and it does not apply to other impellers. Further, depending on the operating condition, there can be a case where the nature of the distribution of the vibration response is changed.

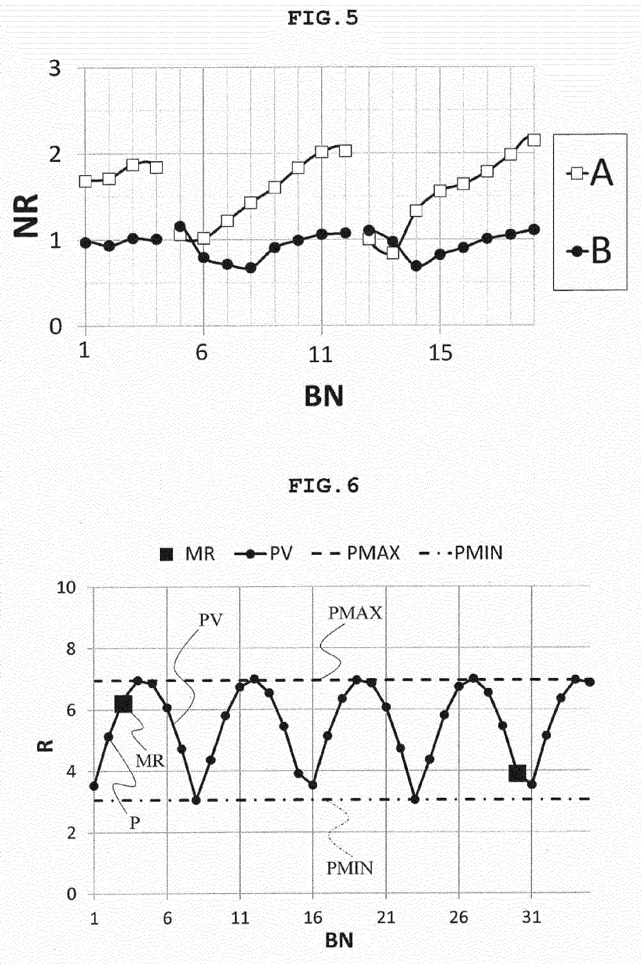

Fig. 5 is a diagram illustrating an example of the distribution of the vibration response of a mistuned blade. Fig. 5 shows the distribution of the vibration response of moving blades assuming a group blade structure, showing the distribution of the vibration response with respect to a part of the moving blades of all the blades. Lines A and B in Fig. 5 show the result of the distribution of the vibration response in the case where the vibration mode in the axial direction of the turbine rotor is the same, and where the node diameter number differs. In Fig. 5, the portions that are the same as those of Fig. 3 are indicated by the same reference characters, and a description thereof will be left out as appropriate.

As shown in Fig. 5, even if the vibration mode in the axial direction of the turbine rotor is the same, there is generated a difference in the magnitude of the vibration response and the distribution with respect to the horizontal axis. That is, even if the vibration mode in the axial direction of the turbine rotor is the same, when the node diameter number differs, the distribution of the vibration response and the blade number at which the peak response is generated are not the same.

As described above, the vibration response of a mistuned blade undergoes a change in a complicated manner, so that, by means of calculation, it is difficult to quantitatively grasp the distribution of the vibration response in a plurality of vibration modes of all the blades even in the case of mistuned type blades to which an arbitrary parameter is imparted, as well as of supposing the vibration response of tuned type blades. As shown in Fig. 3, however, it is possible to grasp the distribution of the vibration response of all the blades through measurement. Further, under a fixed operating condition, the distribution of the vibration response of all the blades does not change for each measurement. The present invention utilizes this characteristic.

Fig. 6 is a diagram illustrating the distribution of vibration response of a moving blade according to the present embodiment. The horizontal axis indicates the blade number BN, and the vertical axis indicates the vibration response R. The point MR indicates the measurement value of the vibration response. For example, it is the value of the vibration response at an arbitrary blade number measured by a strain gage or the like. The line PV indicates the prediction distribution of the vibration response corresponding to the measurement value MR. The prediction distribution of the vibration response is gained, for example, through measurement beforehand. Alternatively, in the case of the entire periphery connection blade structure as shown in Fig. 1, it can be gained through identification of the distribution configuration of the vibration response most suitable to the measurement value MR, taking into account the node diameter number of the vibration mode. The point P indicates the prediction value of the vibration response. The dotted line PMAX indicates the maximum prediction value of the vibration response, and the alternate long and short dash line PMIN indicates the minimum prediction value of the vibration response. The maximum prediction value PMAX and the minimum prediction value PMIN of the vibration response can be gained, for example, from the prediction value P of the vibration response.

In the example of Fig. 6, the measurement value MR is plotted at the blade number 3 and the blade number 30. That is, Fig. 6 shows a case where the vibration responses of the moving blades numbers 3 and 30 are measured, and where the prediction distribution PV of the vibration response corresponding to the measurement values of the vibration responses of the moving blades numbers 3 and 30 is gained, gaining the maximum prediction value PMAX and the minimum prediction value PMIN of the vibration response. As shown in Fig. 6, the magnitude of the vibration response differs according to the blade number. Thus, it can be seen that, depending upon the blade number on which blade the vibration response is measured, there are cases where the maximum prediction value PMAX and the minimum prediction value PMIN of the vibration response cannot be directly gained.

### (Modification)

The present modification differs from the present embodiment in that the maximum prediction value and the minimum prediction value of the vibration response are gained taking into account the measurement errors in the measurement value of the vibration response. Otherwise, it is the same as the present embodiment.

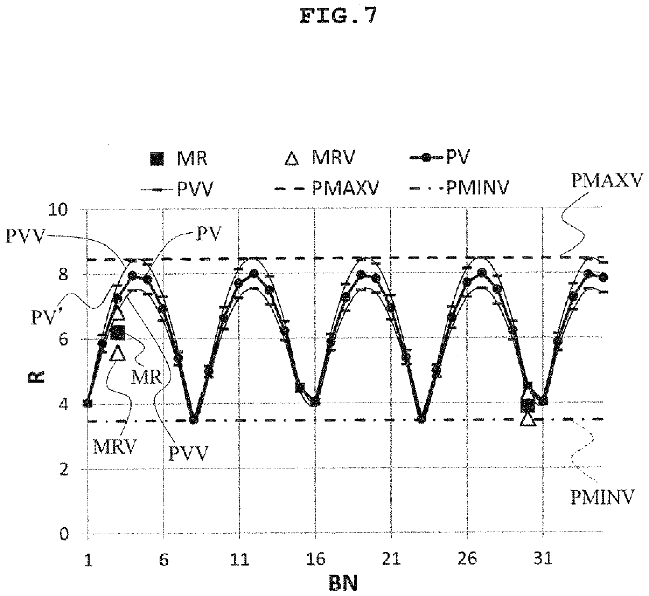

Fig. 7 is a diagram illustrating the distribution of vibration response of a moving blade according to a modification of the present embodiment. In Fig. 7, the portions that are the same as those of the distribution of the vibration response of the moving blade shown in Fig. 6 are indicated by the same reference characters, and a description thereof will be left out as appropriate. The point MRV indicates the measurement value (error measurement value) taking into account the measurement error. The line PVV indicates the prediction distribution of the vibration response corresponding to the error measurement value MRV. The point PV' indicates the prediction value of the vibration response taking into account the measurement error. The dotted line PMAXV indicates the maximum prediction value of the vibration response taking into account the measurement error, and the alternate long and short dash line PMINV indicates the minimum prediction value of the vibration response taking into account the measurement error. The maximum prediction value PMAXV of the vibration response and the minimum prediction value PMINV of the vibration response can be gained, for example, from the prediction value PVV of the vibration response taking into account the measurement error.

As shown in Fig. 7, in the present modification, the measurement error is added to the measurement value MR of the vibration response to gain the error measurement value MRV, and, from the error measurement value MRV, the prediction distribution PVV of the vibration response is gained. Then, the prediction value of the vibration response is gained from the prediction distribution PVV of the vibration response, and the maximum prediction value PMAXV and the minimum prediction value PMINV of the vibration responses are gained. In this way, it is possible to add the measurement error to the measurement value of the vibration response to gain the prediction distribution of the vibration response and to gain the maximum prediction value and the minimum prediction value. The above-mentioned measurement error can be freely set, for example, by the operator.

### (Turbine blade maximum response prediction method)

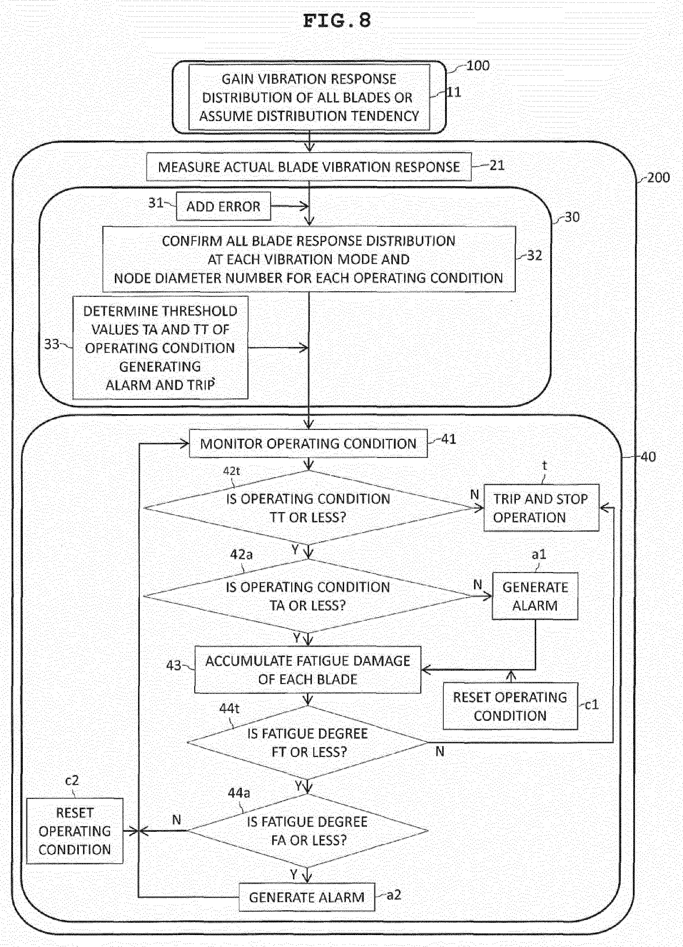

Fig. 8 is a flowchart illustrating the procedures of a maximum response prediction method according to the present embodiment.

The maximum response prediction method according to the present embodiment aims, in particular, to monitor the vibration response of the moving blade over a long period of time. However, it is not restricted to the above object so long as the same effect can be attained. Further, the maximum response prediction method according to the present embodiment presupposes the utilization of the response prediction method shown in Figs. 6 and 7.

As shown in Fig. 8, the maximum response prediction method according to the present embodiment has a pre-phase 100 and an actual plant measurement phase 200.

### *Pre-phase

In the pre-phase 100, measurement is performed on all the moving blades beforehand (before the shipment of the turbine out of the plant, before the start of turbine operation, etc.), whereby the distribution data on the vibration response of all the moving blades incorporated into the impeller is gained for each operating condition, or the tendency of the distribution data of the vibration response of all the blades is assumed with high accuracy for each operating condition.

In the present embodiment, in the pre-phase 100, the vibration response of all the blades during the rotation of the turbine rotor is measured by using a sensor to gain the distribution data (prior response data) of the vibration response of all the blades, or the tendency of the distribution data of the vibration response of all the blades is assumed (step 11). These can be executed through a relatively short-period measurement in the house or in the actual plant. However, there are no restrictions regarding the measurement means, measurement timing, measurement period, etc. so long as they are in conformity with the aim of the present invention.

### *Actual plant measurement phase

As shown in Fig. 8, subsequent to the pre-phase 100, transition to the actual plant measurement phase 200 is effected. The actual plant measurement phase 200 has a vibration response measurement process 21, a blade reliability evaluation process 30, and a monitoring process 40.

After the execution of the pre-phase 100, the vibration response measurement process 21 of the actual plant measurement phase 200 is executed. The vibration response measurement process 21 is a step of measuring the vibration response of the moving blade under each operating condition. In the present embodiment, by using a strain gage, the vibration response of the moving blade during the operation of the turbine is measured on several specific moving blades arbitrarily selected.

While in the present embodiment, by using a strain gage, the vibration response of the moving blade during the operation of the turbine is measured on several specific moving blades arbitrarily selected, it is also possible to adopt some other measurement method. For example, by using a strain gage, it is also possible to gain the vibration response distribution data on a part of the moving blades of all the blades during the operation of the turbine (partial operation response data), and to apply the partial operation response data) to the vibration response distribution data in a specific vibration mode obtained through calculation to gain operation response data. Further, by using a non-contact sensor or the like, the vibration response of several to all moving blades may be measured. In the case where the vibration response of all the blades are measured, a mutually complementary effect with respect to the vibration response distribution data of all the blades gained in step 11, or data related to the tendency of the vibration response distribution of all the blades is to be expected.

In the vibration response measurement process 21, it is desirable for the several moving blades selected as the measurement object of the vibration response to be moving blades that can most greatly influence from data related to the vibration response distribution of all the blades gained in step 11 or from data related to the tendency of the vibration response distribution of all the blades, or ones making it easy to determine the response distribution of all the blades. This makes it possible to further reduce the errors in the vibration response distribution prediction.

A blade reliability evaluation process 30 is a process in which the blade reliability is evaluated based on the measurement result of the vibration response gained in the vibration response measurement process 21. The blade reliability evaluation process 30 has a step 31, step 32, and step 33.

After the execution of the vibration response measurement process 21, the measurement errors are added to the data on the vibration response gained in the vibration response measurement process 21 (step 31). In the present embodiment, the measurement errors are added as needed to the above-mentioned two kinds of measurement results, that is, the vibration response distribution data on all the blades gained in step 11 or the data related to the tendency of the distribution of the vibration response on all the blades, and the measurement result data on the vibration results gained in the vibration response measurement process 21. Depending on the evaluation object or the evaluator, however, transition may be effected from the vibration response measurement process 21 to step 32 described below without executing step 31.

Subsequently, by using the distribution data of the vibration response of all the blades gained in step 11, there are confirmed the distribution data (operation response data) of the vibration response of all the blades during the operation of the turbine at each vibration mode and the node diameter number for each operating condition (step 32). More specifically, there is gained the distribution data of the vibration response of all the blades during the operation of the turbine from the distribution data of the vibration response of all the blades gained in step 11, and the data on the vibration response of the moving blade gained in the vibration response measurement process 21. This is due to the fact that, due to the operating condition such as the vacuum degree and the flow rate, the distribution data of the vibration response of all the blades is changed, and that the moving blade on which the maximum response acts is changed. This is novel in that the vibration response acting under each operating condition for each moving blade is accurately predicted and incorporated into the evaluation

While in the present embodiment described above the distribution data of the vibration response of all the blades during the turbine operation is gained from the distribution data of the vibration response of all the blades under each operating condition gained in step 11 and the data on the vibration response of the moving blade under each operating condition gained in the vibration response measurement process 21, this should not be construed restrictively. For example, by using a sensor, the distribution data of the vibration response of all the blades under a specific operating condition of the turbine operating conditions may be gained, and, based on the distribution data of the vibration response of all the blades under a specific operating condition, the distribution data of the vibration response of all the blades under an operating condition different from the above-mentioned specific operating condition may be gained. Further, by using a strain gage, partial operation response data during the operation of the turbine may be gained, and, from the distribution data of the vibration response of all the blades under each operating condition gained in step 11 and the above partial operation response data, the distribution data of the vibration response of all the blades during the operation of the turbine may be gained.

Subsequently, an alarm threshold value and a turbine trip threshold value are determined (step 33). In the present embodiment, based on the distribution data of the vibration response of all the blades gained in step 32, there are determined a trip threshold value TT (set value) which is a threshold value of the operating condition for determining where or not to cause the turbine to trip, and an alarm threshold value TA (set value) which is a threshold value of the operating condition for determining whether or not to generate an alarm.

A monitoring process 40 is a process that can be executed even after it has become impossible to execute the vibration response measurement process 21 due to damage of the strain gage, expiring of the battery or the like. The monitoring process 40 has a step 41, step 42t, step 42a, step t, step a1, a2, step c1, c2, step 43, step 44t, and step 44a.

After the execution of step 33, the operating conditions are monitored one by one (step 41). In the present embodiment, the operating conditions include the flow rate of the working fluid, the vacuum degree of the exhaust chamber, and a pressure value.

Subsequently, it is determined whether or not the operating condition is equal to or less than a trip threshold value TT (step 42t). When the operating condition is greater than the trip threshold value TT (No), a trip designation signal is output and the operation of the turbine is stopped (step t). On the other hand, when the operating condition is equal to or less than the threshold value TT (Yes), it is determined whether or not the operating condition is equal to or less than the alarm threshold value TA (step 42a). When the operating condition is greater than the alarm threshold value TA (No), an alarm designation signal is output and an alarm is generated (step a1). Further, the operating condition is reset as needed (step c1). This is executed, for example, when the vibration response generated in the moving blade is to be reduced by resetting the operating condition. After this, the operation of the turbine is resumed in the normal fashion. On the other hand, when the operating condition is equal to or less than the alarm threshold value TA (Yes), there is no need to change (reset) the operating condition, and the operation of the turbine is resumed in the normal fashion.

When resuming the operation of the turbine, there are subsequently accumulated for each moving blade the fatigue damage values (fatigue degree) of all the moving blades that can be estimated from the operating condition, and the accumulative value is computed (step 43). This is due to the fact that the response distribution of the moving blades differ in accordance with the operating condition, the vibration mode generated, and the node diameter number. It is conducted for the purpose of quantitatively monitoring the response amount generated for each moving blade. For the sake of evaluation of the safety side, it is possible to accumulate solely the fatigue damage values of the moving blades of all the moving blades on which the maximum vibration response acts to compute the accumulative value, utilizing it for the evaluation that follows. Further, it is possible to accumulate solely the maximum vibration responses of all the moving blades to compute the accumulative value ignoring the blade number, utilizing it for the evaluation that follows.

Subsequently, it is determined whether or not the accumulative value gained in step 43 is equal to or less than a previously set trip threshold value (fatigue degree trip threshold value) FT (step 44t). When the accumulative value is greater than the trip threshold value FT (No), a trip designation signal is output, and the operation of the turbine is stopped (step t). On the other hand, when the accumulative value is equal to or less than the trip threshold value FT (Yes), it is determined whether or not the accumulative value is equal to or less than a previously set alarm threshold value (fatigue degree threshold value) FA (step 44a). When the accumulative value is not less than the alarm threshold value FA (No), an alarm designation signal is output and an alarm is generated (step a2). Further, the operating condition is reset as needed (step c2). This is executed, for example, when the vibration response generated in the moving blade is to be reduced by changing the operating condition. After this, the operation of the turbine is resumed in the normal fashion. On the other hand, when the accumulative value is equal to or less than the alarm threshold value FA (Yes), there is no need for changing and the operation can be resumed in the normal fashion. By the above procedures, the vibration response of all the blades in the actual plant is continued to be monitored.

### (Turbine blade maximum response prediction system)

The maximum response prediction method according to the present embodiment can also be realized as a maximum response prediction system. The maximum response prediction system is provided, for example, in a turbine. In the example described below, the maximum response prediction method of the present embodiment is realized as the maximum response prediction system.

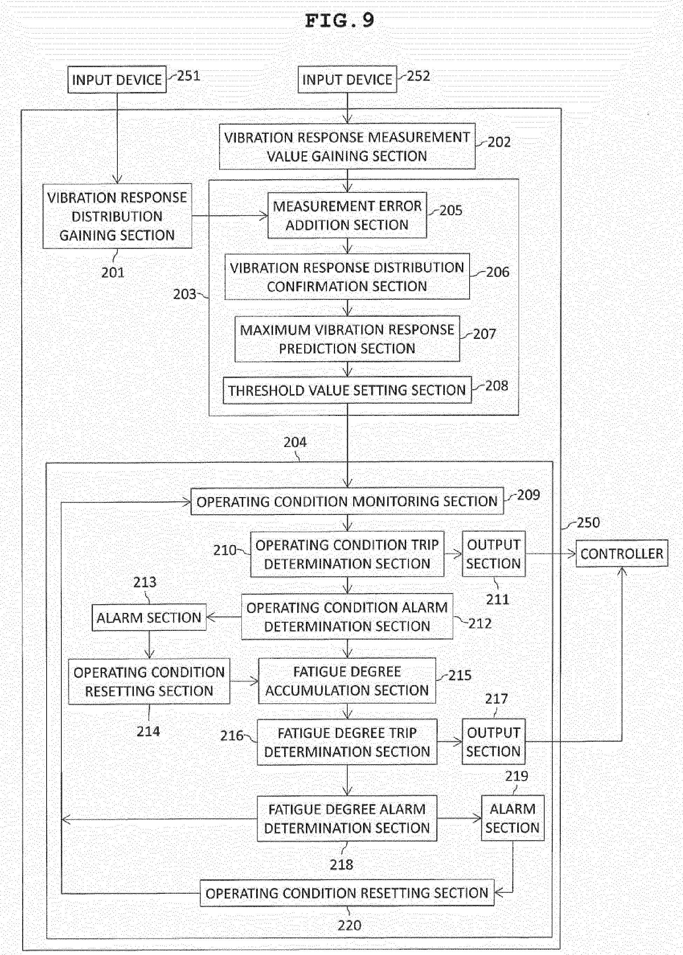

Fig. 9 is a diagram illustrating the functional blocks of a maximum response prediction system according to the present embodiment. As shown in Fig. 9, a maximum response prediction system 250 according to the present embodiment is equipped with a vibration response distribution gaining section 201, a vibration response measurement value gaining section 202, a blade reliability evaluation section 203, and a monitoring section 204.

The vibration response distribution gaining section 201 serves to gain distribution data of the vibration response of all the blades at the time of rotation of the turbine rotor, or to assume the tendency of the distribution data of the vibration response of all the blades.
In the present embodiment, the vibration response distribution gaining section 201 gains the distribution data of the vibration response of all the blades at the time of rotation of the turbine rotor from an input device 251 connected to a sensor executing the vibration measurement of all the blades.

The vibration response measurement value gaining section 202 gains the data on the vibration response of the moving blades. In the present embodiment, the vibration response of several moving blades arbitrarily selected is measured by the strain gage, and the vibration response measurement value gaining section 202 gains the data on the vibration response of the moving blades from the input device 252 connected to the strain gage. While in the present embodiment the vibration response of several moving blades arbitrarily selected is measured by the strain gage, and the data on the vibration response of the moving blades is gained, it is also possible to measure the vibration response of several to all the blades by using the sensor, and to gain the data on the vibration response of the moving blades.

The blade reliability evaluation section 203 is equipped with a measurement error addition section 205, a vibration response distribution confirmation section 206, a maximum vibration response prediction section 207, and a threshold value setting section 208.

The measurement error addition section 205 adds an error to the measurement result of the vibration response of the moving blades. In the present embodiment, the measurement error addition section 205 inputs the distribution data of the vibration response of all the blades gained by the vibration response distribution gaining section 201 from the vibration response distribution gaining section 201, and inputs the data on the vibration response of the moving blades gained by the vibration response measurement value gaining section 202 from the vibration response measurement value gaining section 202, adding a set measurement error thereto. Depending upon the object of evaluation and the evaluator, the above function of the measurement error addition section 205 may not be utilized.

The vibration response distribution confirmation section 206 confirms the distribution data on the vibration response of all the blades at each vibration mode and the node diameter number for each operating condition. In the present embodiment, the vibration response distribution confirmation section 206 inputs the distribution data on the vibration of all the moving blades which is gained by the vibration response distribution gaining section 201 and to which a measurement error is added as needed by the measurement error addition section 205, and inputs the vibration response data of the moving blade which is gained by the vibration response measurement value gaining section 202 and to which a measurement error is added by the measurement error addition section 205, confirming the distribution data of the vibration response of all the blades at each vibration mode and the node diameter number for each operating condition.

The maximum vibration response prediction section 207 inputs the vibration response distribution data of all the blades confirmed by the vibration response distribution confirmation section 206, and, from the input vibration response distribution data of all the blades, predicts the moving blade of the plurality of moving blades on which blade the maximum vibration response is acting, and the magnitude of the maximum vibration response.

The threshold value setting section 208 determines the trip threshold value TT and the alarm threshold value TA from the vibration response distribution data of all the blades. In the present embodiment, the threshold value setting section 208 inputs the vibration response distribution data of all the blades confirmed by the vibration response distribution confirmation section 206, and, based on the input vibration response distribution data of all the blades, determines the alarm threshold value TA and the trip threshold value TT.

The monitoring section 204 is equipped with an operating condition monitoring section 209, an operating condition trip determination section 210, an output section (first output section) 211, an operating condition alarm determination section 212, an alarm section (first alarm section) 213, an operating condition resetting section (first operating condition resetting section) 214, a fatigue degree accumulation section 215, a fatigue degree trip determination section 216, an output section (second output section) 217, a fatigue degree alarm determination section 218, an alarm section (second alarm section) 219, and an operating condition resetting section (second operating condition resetting section) 220.

The operating condition monitoring section 209 serves to monitor the turbine operating condition.

The operating condition trip determination section 210 serves to determine whether or not the operating condition monitored by the operating condition monitoring section 209 is equal to or less than the trip threshold value TT set by the threshold value setting section 208. In the present embodiment, when it is determined that the operating condition is greater than the trip threshold value TT, the operating condition trip determination section 210 outputs a trip designation signal to the output section 211. On the other hand, when it is determined that the operating condition is equal to or less than the trip threshold value TT, the operating condition trip determination section 210 outputs a signal to the operating condition alarm determination section 212.

The output section 211 serves to output a signal to the controller of the turbine to stop the turbine. In the present embodiment, when it inputs a trip designation signal from the operating condition trip determination section 210, the output section 211 outputs a signal to the controller of the turbine to stop the turbine.

The operating condition alarm determination section 212 serves to determine whether or not the operating condition monitored by the operating condition monitoring section 209 is equal to or less than the alarm threshold value TA set by the threshold value setting section 208. In the present embodiment, when it is determined that the operating condition is greater than the alarm threshold value TA, the operating condition alarm determination section 212 outputs an alarm designation signal to the alarm section 213. On the other hand, when it is determined that the operating condition is equal to or less than the alarm threshold value TA, the operating condition alarm determination section 212 outputs a signal to the fatigue degree accumulation section 215.

The alarm section 213 starts the alarm to generate an alarm. In the present embodiment, when an alarm designation signal is input from the operating condition alarm determination section 212, the alarm section 213 starts the alarm to generate an alarm.

The operating condition resetting section 214 serves to reset and change the operating condition as needed. In the present embodiment, when the alarm section 213 starts the alarm to generate an alarm, the operating condition resetting section 214 resets and change the operating condition, and outputs a signal to the fatigue degree accumulation section 215.

The fatigue degree accumulation section 215 accumulates the fatigue degree that can be estimated from the operating condition monitored by the operating condition monitoring section 209 for each moving blade, and computes the accumulative value. In the present embodiment, when the signal from the operating condition alarm determination section 212 or the signal from the operating condition resetting section 214 is input, the fatigue degree accumulation section 215 accumulates the fatigue degree that can be estimated from the operating condition monitored by the operating condition monitoring section 209 for each moving blade, and computes the accumulative value.

The fatigue degree trip determination section 216 determines whether or not the accumulative value accumulated by the fatigue degree accumulation section 215 is equal to or less than the trip threshold value FT. In the present embodiment, the trip threshold value FT is stored in a storage section (not shown), and the fatigue degree trip determination section 216 reads the trip threshold value FT from the storage section. In the present embodiment, when it is determined that the accumulative value is greater than the trip threshold value FT, the fatigue degree trip determination section 216 outputs a trip designation signal to the output section 217. On the other hand, when it is determined that the accumulative value is equal to or less than the trip threshold value FT, the fatigue degree trip determination section 216 outputs a signal to the fatigue degree alarm determination section 218.

The output section 217 has the same function as the output section 211. In the present embodiment, when the trip designation signal is input from the fatigue degree trip determination section 216, the output section 217 outputs a signal to the controller of the turbine to stop the turbine.

The fatigue degree alarm determination section 218 serves to determine whether or not the accumulative value accumulated in the fatigue degree accumulation section 215 is equal to or less than the alarm threshold value FA. In the present embodiment, the alarm threshold value FA is stored in the storage section (not shown), and the fatigue degree alarm determination section 218 reads the trip threshold value FT from the storage section. In the present embodiment, when it is determined that the accumulative value is greater than the alarm threshold value FA, the fatigue degree alarm determination section 218 outputs an alarm designation signal to the alarm section 219. On the other hand, when it is determined that the accumulative value is equal to or less than the alarm threshold value FA, the fatigue degree alarm determination section 218 outputs a signal to the operating condition monitoring section 209. When the signal from the fatigue degree alarm determination section 218 is input thereto, the operating condition monitoring section 209 starts the monitoring of the turbine operating condition.

The alarm section 219 has the same function as that of the alarm section 213. In the present embodiment, when an alarm designation signal is input from the fatigue degree alarm determination section 218, the alarm section 219 starts the alarm to generate an alarm.

The operating condition resetting section 220 has the same function as that of the operating condition resetting section 214. In the present embodiment, when the alarm section 219 is started to generate an alarm, the operating condition resetting section 220 resets and changes the operating condition.

### (Control program)

The processing by the maximum response prediction system 250 according to the present embodiment is executed, for example, by a control program stored in a computer. In the following, to be described will be the case where the processing by the maximum response prediction system 250 according to the present embodiment is executed by a control program stored in a computer.

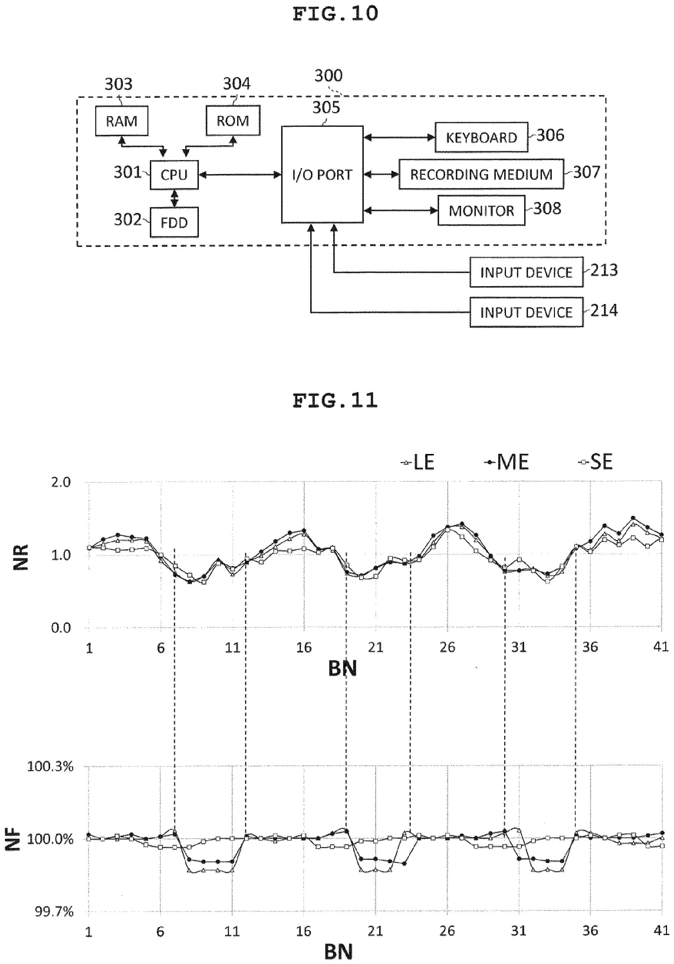

Fig. 10 is a schematic diagram illustrating a computer for realizing the processing by the maximum response prediction system according to the present embodiment. As shown in Fig. 10, a computer 300 according to the present embodiment is equipped with, as hardware, a CPU (central processing unit) 301, an HDD (hard disk drive) 302, an RAM (random-access memory) 303, an ROM (read-only memory) 304, an I/O port 305, a keyboard 306, a recording medium 307, and a monitor 308. There are no restrictions regarding the form of the computer 300. It may be a desktop PC, a notebook PC, or a tablet PC.

In the present embodiment, the control program is stored in the ROM 304. The CPU 301 reads the control program from the ROM 304 and executes it, whereby the maximum response prediction system 250 (the vibration response distribution gaining section 201, the vibration response measurement value gaining section 202, the blade reliability evaluation section 203, the monitoring section 204, etc.) is loaded into the RAM 303 and generated.

In the present embodiment, the control program causes the vibration response distribution gaining section 201 to execute the processing of gaining from the input device 251 the distribution data on the vibration response of all the blades at the time of rotation of the turbine rotor.

Next, the control program causes the vibration response measurement value gaining section 202 to execute the processing of gaining from the input device 252 the data on the vibration response of several moving blades arbitrarily selected.

Next, the control program causes the measurement error addition section 205 to execute the processing of adding as needed a measurement error to the distribution data on the vibration response of all the blades gained by the vibration response distribution gaining section 201 and the data on the vibration response of the moving blades gained by the vibration response measurement value gaining section 202. Then, the control program causes the vibration response distribution confirmation section 206 to execute the processing of confirming the distribution data of the vibration response of all the blades at each vibration mode and the node diameter number for each operating condition from the distribution data of all the blades which is gained by the vibration response distribution gaining section 201 and to which a measurement error is added as needed by the measurement error addition section 205, and from the distribution data on the vibration response of the moving blades which is gained by the vibration response measurement value gaining section 202 and to which a measurement error is added as needed by the measurement error addition section 205. Then, the control program causes the maximum vibration response prediction section 207 to execute the processing of predicting the moving blades of a plurality of moving blades on which the maximum vibration response is acting and the magnitude of the maximum vibration response from the distribution data of the vibration response of all the blades confirmed by the vibration response distribution confirmation section 206. Then, the control program causes the threshold value setting section 208 to execute the processing of determining the alarm threshold value TA and the trip threshold value TT from the vibration response distribution of all the blades confirmed by the vibration response distribution confirmation section 206.

Next, the control program causes the operating condition monitoring section 209 to execute the processing of monitoring the operating condition of the turbine. Then, the control program causes the operating condition trip determination section 210 to execute the processing of determining whether or not the operating condition monitored by the operating condition monitoring section 209 is equal to or less than the trip threshold value TT set by the threshold value setting section 208. When it is determined by the operating condition trip determination section 210 that the operating condition is greater than the trip threshold value TT, the control program causes the operating condition trip determination section 210 to execute the processing of outputting the trip designation signal to the output section 211. On the other hand, when it is determined by the operating condition trip determination section 210 that the operating condition is equal to or less than the trip threshold value TT, the control program causes the operating condition trip determination section 210 to execute the processing of outputting a signal to the operating condition alarm determination section 212. When the output section 211 inputs the trip designation signal, the control program causes the output section 211 to execute the processing of outputting a signal to the turbine controller to stop the turbine. On the other hand, when the operating condition alarm determination section 212 outputs a signal, the control program causes the operating condition alarm determination section 212 to execute the processing of determining whether or not the operating condition monitored by the operating condition monitoring section 209 is equal to or less than the alarm threshold value TA set by the threshold value setting section 208. When it is determined by the operating condition alarm determination section 212 that the operating condition is greater than the alarm threshold value TA, the control program causes the operating condition alarm determination section 212 to execute the processing of outputting the alarm designation signal to the alarm section 213. On the other hand, when it is determined by the operating condition alarm determination section 212 that the operating condition is equal to or less than the alarm threshold value TA, the control program causes the operating condition alarm determination section 212 to execute the processing of outputting a signal to the fatigue degree accumulation section 215. When the alarm section 213 inputs the alarm designation signal, the control program causes the alarm section 213 to execute the processing of generating an alarm. Then, the control program causes the operating condition resetting section 214 to execute the processing of resetting and changing the operating condition.

Next, when the fatigue degree accumulation section 215 inputs the signal from the operating condition alarm determination section 212 or the signal from the operating condition resetting section 214, the control program causes the fatigue degree accumulation section 215 to execute the processing of accumulating the fatigue degree that can be estimated from the operating condition monitored by the operating condition monitoring section 209 for each moving blade and computing the accumulative value. Then, the control program causes the fatigue degree trip determination section 216 to execute the processing of determining whether or not the accumulative value accumulated by the fatigue degree accumulation section 215 is equal to or less than the trip threshold value FT. When it is determined by the fatigue degree trip determination section 216 that the accumulative value is greater than the trip threshold value FT, the control program causes the fatigue degree trip determination section 216 to execute the processing of outputting the trip designation signal to the output section 217. On the other hand, when it is determined by the fatigue degree trip determination section 216 that the accumulative value is equal to or less than the trip threshold value FT, the control program causes the fatigue degree trip determination section 216 to execute the processing of outputting a signal to the fatigue degree alarm determination section 218. When the trip designation signal is output to the output section 217, the control program causes the output section 217 to execute the processing of outputting a signal to the turbine controller to stop the turbine. On the other hand, when a signal is output to the fatigue degree alarm determination section 218, the control program causes the fatigue degree alarm determination section 218 to execute the processing of determining whether or not the accumulative value accumulated by the fatigue degree accumulation section 215 is equal to or less than the alarm threshold value FA. When it is determined by the fatigue degree alarm determination section 218 that the accumulative value is greater than the alarm threshold value FA, the control program causes the fatigue degree alarm determination section 218 to execute the processing of outputting the alarm designation signal to the alarm section 219. On the other hand, when it is determined by the fatigue degree alarm determination section 218 that the accumulative value is equal to or less than the alarm threshold value FA, the control program causes the fatigue degree alarm determination section 218 to execute the processing of outputting a signal to the operating condition monitoring section 209. When the signal is output to the operating condition monitoring section 209, the control program causes the operating condition monitoring section 209 to execute the processing of monitoring the turbine operating condition. When the alarm designation signal is output to the alarm section 219, the control program causes the alarm section 219 to execute the processing of starting the alarm to generate an alarm. Then, the control program causes the operating condition resetting section 220 to execute the processing of resetting and changing the operating condition.

In the present embodiment, the value and signal input at the keyboard 306 are transmitted to the CPU 301 via the I/O port 305 together with the vibration response distribution data on all the blades at the time of rotation of the turbine rotor and the vibration response data on arbitrarily selected moving blades. The vibration response distribution data on all the blades at the time of rotation of the turbine rotor, the vibration response data on arbitrarily selected moving blades, the trip threshold value FT, the alarm threshold value FA, etc. are store in a storage medium such as the HDD 302 and the ROM 304. The alarm sections 213 and 219 may also be structured such that, instead of generating an alarm, an alarm is displayed on a monitor (display means) 308 via the I/O port 305.

In this way, the processing by the maximum response prediction system 250 of the present embodiment may be executed by a control program stored in a computer. For example, the program may be installed from a server or the like to cause the above processing to be executed. It is also possible to record the control program in the recording medium 307 and to read it to cause the above processing to be executed. Examples of the recording medium 307 that can be used include various type of medium: a recording medium recording information optically, electrically, or magnetically such as a CD-ROM, flexible disk, and magnetooptical disk, and a semiconductor memory recording information electrically such as an ROM and flash memory.

### (Effects)

(1) In the present embodiment, there is gained reference response data that is distribution data of the vibration response of all the moving blades before the turbine operation start for each turbine operating condition, and, from the reference response data, there is gained object response data that is distribution data of the vibration response of all the moving blades during turbine operation, and, from the object response data, there are predicted the moving blades of a plurality of moving blades on which the maximum vibration response is acting and the magnitude of the maximum vibration response. In this way, at a pre-phase, for example, before the turbine operation start, distribution data of the vibration response of all the moving blades is gained or assumed from the measurement and the calculation result of the vibration response of all or part of the blades or measurement result using similar blades, whereby, in an actual turbine (operating turbine), it is possible to confirm a different vibration mode under a different operating condition, and the response distribution of all the moving blades at a different node diameter number with solely measuring the vibration response of a part of moving blades or without executing the measurement of the vibration response. As a result, even in the case where it is impossible to measure and gain the distribution of the vibration response of all the moving blades during the operation of the turbine, it is possible to predict and confirm the vibration response of all the moving blades, and to predict the moving blade of the plurality of moving blades on which the maximum vibration response is acting and the magnitude of the maximum vibration response.
(2) In the present embodiment, based on the object response data, there are set the threshold value of the operating condition for determining whether or not to cause the turbine to trip, the threshold value of the operating condition for determining whether or not an alarm is to be generated, etc. Thus, it is possible to operate the turbine in a proper fashion, making it possible to secure the reliability of the turbine.
(3) In the present embodiment, there is accumulated the degree of fatigue damage of the moving blade of the plurality of moving blades on which the maximum vibration response is acting to compute the fatigue accumulative value, and, based on the fatigue accumulative value, there are set the threshold value of the operating condition for determining whether or not to cause the turbine to trip, the threshold value of the operating condition for determining whether or not an alarm is to be generated, etc. Thus, it is possible to avoid damage or the like of the moving blade due to the accumulation of the fatigue, whereby it is possible to properly operate the turbine, and to more reliably secure the reliability of the turbine.

### [Second Embodiment]

The present embodiment differs from the first embodiment in that attention is focused on the relationship between the vibration response and the distribution of the natural frequency, and that, by utilizing the relationship between the vibration response and the distribution of the natural frequency, there are predicted the magnitude of the vibration response and the moving blades in which the maximum value is generated based solely on the measurement of the natural frequency. Otherwise, the present embodiment is the same as the first embodiment.

Fig. 11 is a diagram illustrating the relationship between the distribution of the vibration response of a moving blade to which the present invention is applied and the distribution of a natural frequency. The upper portion of Fig. 11 is a diagram illustrating an example of the distribution of the vibration response of the moving blade to which the present invention is applied. The lower portion of Fig. 11 is a diagram illustrating an example of the distribution of the natural frequency of the moving blade to which the present invention is applied. In the upper portion of Fig. 11, the same portions as those of the distribution of the vibration response of the moving blade shown in Fig. 3 are indicated by the same reference characters, and a description thereof will be left out as appropriate. In the lower portion of Fig. 11, the horizontal axis indicates the blade number BN, and the vertical axis indicates the change ratio NF of the natural frequency with respect to the average value of all the blades.

As shown in Fig. 11, the natural frequency with respect to the blade number BN varies in accordance with the magnitude of the vibration response. More specifically, in the medium exciting force indicated by the line ME and the large exciting force indicated by the line LE, the natural frequency is reduced at the portion where the peak response normalization value NR is minimum, that is, at the portion corresponding to the trough of the vibration response crest (blade numbers 7 through 12, etc. in the example of Fig. 11. Further, the greater the vibration response, the larger the reduction amount of the natural frequency with respect to the average value. In this way, there is a feature in the distribution relationship between the vibration response and the natural frequency. By utilizing this feature, it is possible to identify the magnitude of the vibration response and the moving blade in which the maximum value is generated solely through the measurement of the natural frequency. In the method of the present embodiment, it is possible to determine the level of range of the vibration response of the moving blade by utilizing the varying natural frequency under an arbitrary operating condition without measuring the vibration response. The distribution relationship between the vibration response and the natural frequency is not uniform. It varies according to the object blade.

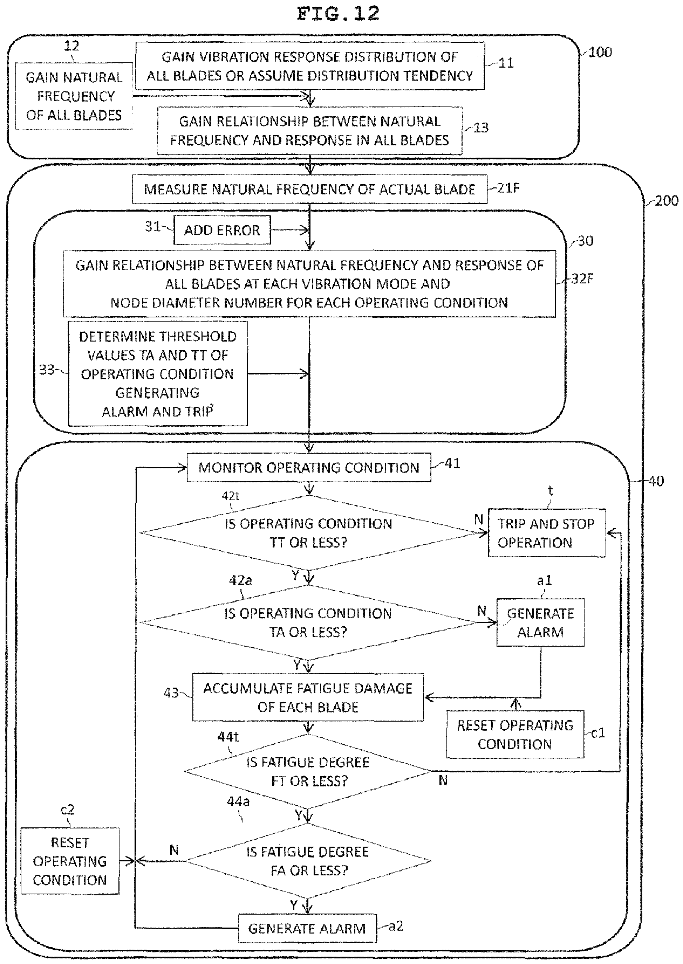

Fig. 12 is a flowchart illustrating the procedures of a maximum response prediction method according to the present embodiment. In Fig. 12, the same steps as those of the flowchart of Fig. 8 are indicated by the same reference numerals, and a description thereof will be left out as appropriate.

Unlike the flowchart of Fig. 8, as shown in Fig. 12, in the present embodiment, in a pre-phase 100, in addition to step 11, there is gained the distribution data of the natural frequencies of all the blades (prior natural frequency data) (step 12). Then, from the two kinds of result gained in steps 11 and 12 (the distribution of the vibration response of all the blades and the distribution of the natural frequencies), there is gained the relationship (correlation) between the vibration response and the natural frequency of all the blades (step 13).

Next, there is effected transition to an actual plant measurement phase 200. In the present embodiment, the actual plant measurement phase 200 has a natural frequency measurement process 21F. The natural frequency measurement process 21F is a process in which the distribution data of the natural frequency of all or a part of the moving blades during the operation of the turbine (the operation natural frequency data) is measured and gained by using a sensor or the like. Subsequently, in the present embodiment, in a blade reliability evaluation process 30, a blade reliability evaluation system is built based on the measurement result of the natural frequency gained in the natural frequency measurement process 21F. More specifically, the measurement error is added as needed to the natural frequency gained in the natural frequency measurement process 21F (step 31), the distribution relationship between the natural frequency and the vibration response of all the blades at each vibration mode and the node diameter number for each operating condition is gained, and the operation response data during the turbine operation at each vibration mode and the node diameter number for each operating condition is gained (step 32F). Then, based on the vibration response distribution data on all the blades gained in step 32F, the alarm threshold value TA and the trip threshold value TT are determined (step 33).

Next, transition is effected to the monitoring process 40. The monitoring process 40 is the same as that of the first embodiment.

In the present embodiment, there is attained the following effect in addition to that of the first embodiment.

In the present embodiment, it is only necessary to measure (gain) solely the natural frequency of all or a part of the moving blades during the operation of the turbine, so that it is possible to reduce the number of sensors as compared with the case where the vibration response is quantitatively measured, thus making it possible to suppress an increase in cost.

### [Third Embodiment]

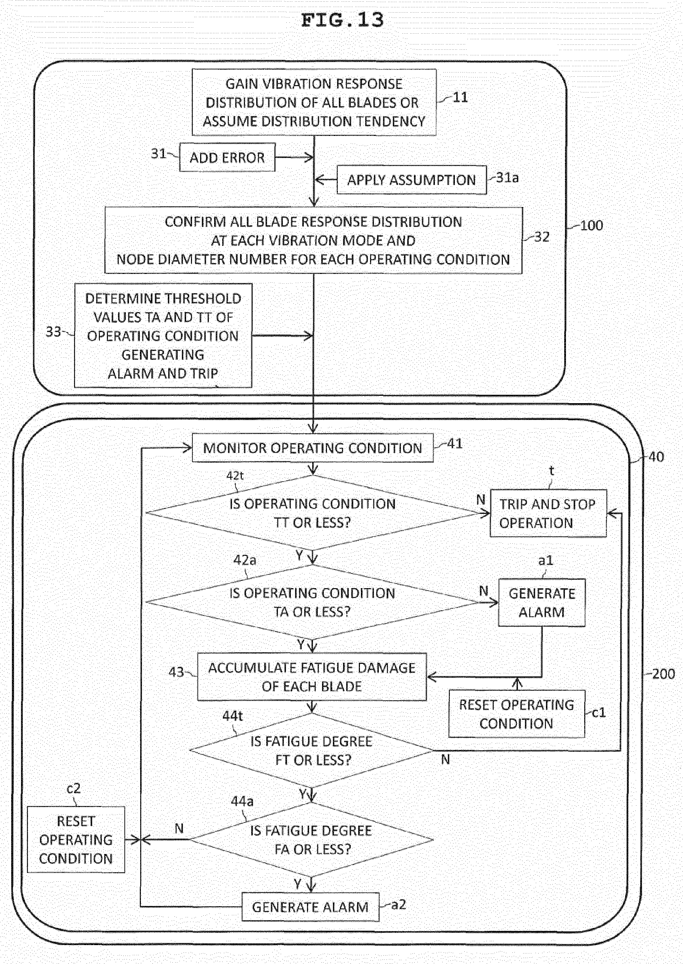

Fig. 13 is a flowchart illustrating the procedures of a maximum response prediction method according to the present embodiment. In Fig. 13, the same steps as those of the flowchart shown in Fig. 8 are indicated by the same reference numerals, and a description thereof will be left out as appropriate.

Unlike the flowchart shown in Fig. 8, as shown in Fig. 13, in the present embodiment, in the pre-phase 100, subsequent to step 11, the measurement error is added as needed to the data of the distribution of the vibration response of all the blades gained in step 11 or the data related to the tendency of the distribution of the vibration response of all the blades (step 31). Then, subsequent to step 31, the distribution data of the vibration response of the moving blades during the operation of the turbine is assumed from the calculation result of fluid analysis, mode analysis, response analysis, etc. and the measurement result using similar moving blades, etc., and it is applied to the distribution data of the vibration response of all the blades gained in step 11, etc. (step 31a). The, prior to transition to the actual plant measurement phase 200, the distribution data of the vibration response of all the blades at each vibration mode and the node diameter number for each operating condition is confirmed (step 32). While in step 11 it is desirable to measure the distribution data of the vibration response of all the blades under all operating conditions, the measurement number and the operating conditions may be reduced arbitrarily according to the addition of the measurement error (step 31) and application of various assumptions (step 31a). Then, based on the distribution data of the vibration response of all the blades gained in step 32, the alarm threshold value TA and the trip threshold value TT are determined (step 33).

Next, transition is effected to the monitoring process 40. In the present embodiment, the measurement of the vibration response of the moving blade is not indispensable to the monitoring process 40. In the case where the measurement of the vibration response of the moving blade is not performed, the operating condition is monitored by using solely the distribution data of the vibration response of all the blades gained in the pre-phase 100 (step 41). The steps from this onward are the same as those of the first embodiment.

In the present embodiment, it is possible to attain the following effect in addition to that of the first embodiment.

In the present embodiment, as compared with the case where the measurement of the vibration response of the moving blade is not performed as in the prior art, it is possible to achieve an improvement in terms of the quantification in response evaluation. Further, in the present embodiment, there is no need to directly measure the vibration response of the moving blade in an actual turbine, so that, as compared with the first embodiment, it is possible to suppress an increase in cost and to shorten the term of work (operation period).

### [Others]

The present invention is not restricted to the above-described embodiments but includes various modifications. For example, the above embodiments, which have been described in detail in order to facilitate the understanding of the present invention, are not always restricted to ones equipped with all the components mentioned above. For example, a part of the structure of a certain embodiment can be replaced by the structure of another embodiment, and the structure of some other embodiment may be added to the structure of a certain embodiment. Further, a part of the structure of each embodiment can be deleted.

In the embodiments described above, the present invention is applied to the moving blades constituting the last blade group of a steam turbine. It should be noted, however, that the essential effect of the present invention lies in the fact that even in the case where it is impossible to measure the vibration response of all the moving blades, there are provided a turbine blade maximum response prediction method, a turbine blade maximum response prediction system, a turbine equipped therewith, and a control program which make it possible to predict and evaluate the vibration response of all the moving blades, and so long as this essential effect can be attained, the above-described structure should not be construed restrictively. For example, the present invention is also applicable to the stator vanes of a steam turbine. Further, the present invention is also applicable to some other turbo machine including a gas turbine. Further, the structure of the blades to which the present invention is applied is not restricted to the above-described embodiments. The present invention also includes a structure and a method similar to the above embodiments and helping to achieve the object of the present invention.

### Description of Reference Characters

1: Turbine moving blade
6: Turbine rotor
250: Maximum vibration response prediction system
206: Vibration response distribution confirmation section
207: Maximum vibration response prediction section

## Claims

1. A turbine blade maximum vibration response prediction method for predicting a maximum vibration response acting on a plurality of turbine moving blades (1) provided along a circumferential direction of a turbine rotor (6), the method **characterized by** comprising:
gaining, before turbine operation start, prior response data that is distribution data on vibration response of all the turbine moving blades (1) for each turbine operating condition;
gaining, by using the prior response data, operation response data that is distribution data on the vibration response of all the turbine moving blades (1) during operation of the turbine; and
predicting, from the operation response data, a turbine moving blade (1) which is one of all the turbine moving blades (1) and on which the maximum vibration response is acting, and magnitude of the maximum vibration response.

2. The turbine blade maximum vibration response prediction method according to claim 1, wherein,
based on the operation response data, there are set a threshold value for the turbine operating condition for determining whether or not the turbine is caused to trip, and a threshold value for the turbine operating condition for determining whether or not an alarm is to be generated.

3. The turbine blade maximum vibration response prediction method according to claim 1, wherein:
by using a strain gage provided on the turbine moving blade (1) and a turbine rotor (6), there is gained vibration response data on a specific turbine moving blade (1) of all the turbine moving blades (1) during the operation of the turbine; and
the operation response data is gained from the vibration response data on the specific turbine moving blade (1) and the prior response data.

4. The turbine blade maximum vibration response prediction method according to claim 1, wherein
the prior response data is gained by using a sensor.

5. The turbine blade maximum vibration response prediction method according to claim 4, wherein:
by using a strain gage provided on the turbine moving blade (1) and a turbine rotor (6), there is gained the prior response data on a part of the turbine moving blades (1) of all the turbine moving blades (1); and
the distribution data on the vibration response of all the turbine moving blades (1) previously obtained is combined with the prior response data on the part of the turbine moving blades (1) to gain the prior response data.

6. The turbine blade maximum vibration response prediction method according to claim 1, wherein:
by using a strain gage provided on the turbine moving blade (1) and a turbine rotor (6), there is gained the prior response data on a part of the turbine moving blades (1) of all the turbine moving blades (1); and
the distribution data on the vibration response of all the turbine moving blades (1) in a specific vibration mode obtained through calculation is applied to the prior response data on the part of the turbine moving blades (1) to gain the prior response data.

7. The turbine blade maximum vibration response prediction method according to claim 1, further comprising
gaining the operation response data under a specific operating condition of the turbine operating condition by using a sensor, wherein,
based on the operation response data under the specific operating condition, the operation response data is gained under an operating condition different from the specific operating condition.

8. The turbine blade maximum vibration response prediction method according to claim 1, wherein
the turbine moving blade (1) is arranged on a downstream side in a flowing direction of a working fluid of the turbine rotor (6).

9. The turbine blade maximum vibration response prediction method according to claim 1, wherein
degree of fatigue damage of all the turbine moving blades (1) or degree of fatigue damage of the turbine moving blade (1) which is one of all the turbine moving blades (1) and on which the maximum vibration response is acting is accumulated.

10. The turbine blade maximum vibration response prediction method according to claim 9, wherein,
based on an accumulative value obtained through accumulation of the degree of fatigue damage, it is determined whether or not the turbine is to be caused to trip.

11. The turbine blade maximum vibration response prediction method according to claim 10, wherein,
based on the accumulative value of the degree of fatigue damage, it is determined whether or not an alarm is to be generated.

12. The turbine blade maximum vibration response prediction method according to claim 1, further comprising:
gaining, by using a sensor, prior natural frequency data that is distribution data on natural frequency of all the turbine moving blades (1) prior to operation start of the turbine along with the prior response data;
gaining, from the prior response data and the prior natural frequency data, a correlation that is a relationship between magnitude of the vibration response of all the turbine moving blades (1) and change ratio of the natural frequency; and
gaining, by using a sensor, operation natural frequency data that is distribution data on the natural frequency of all the turbine moving blades (1) during the operation of the turbine, wherein,
based on the operation natural frequency data, the operation response data is gained from the correlation.

13. The turbine blade maximum vibration response prediction method according to claim 12, wherein,
based on the operation response data and the operation natural frequency data, there are determined a threshold value of the turbine operating condition for determining whether or not the turbine is to be caused to trip, and a threshold value of the turbine operating condition for determining whether or not an alarm is to be generated.

14. The turbine blade maximum vibration response prediction method according to claim 13, further comprising
gaining operation prediction response data predicting the operation response data from a measurement result using a turbine moving blade (1) similar to the turbine moving blade (1) or a calculation result including analysis, wherein
the operation response data is gained from the prior response data and the operation prediction response data.

15. A turbine blade maximum vibration response prediction system (250) for predicting a maximum vibration response acting on a plurality of turbine moving blades (1) provided along a circumferential direction of a turbine rotor (6), **characterized by** comprising:
a vibration response distribution confirmation section (206) for gaining operation response data that is distribution data on vibration response of all the turbine moving blades (1) during operation of a turbine from prior response data that is distribution data on the vibration response of all the turbine moving blades (1), gained prior to operation start of the turbine; and
a maximum vibration response prediction section (207) for predicting, from the operation response data, a turbine moving blade (1) which is one of all the turbine moving blades (1) and on which the maximum vibration response is acting, and magnitude of the maximum vibration response.

16. A turbine comprising:
a casing;
a turbine rotor (6) accommodated in the casing;
a plurality of turbine moving blades (1) provided along a circumferential direction of the turbine rotor (6); and
the maximum vibration response prediction system (250) as claimed in claim 15.

17. A control program for a turbine blade maximum vibration response prediction system (250) for predicting a maximum vibration response acting on a plurality of turbine moving blades (1) provided along a circumferential direction of a turbine rotor (6), **characterized in that** the control program causes the turbine blade maximum vibration response prediction system (250) to execute:
processing of gaining operation response data that is distribution data on vibration response of all the turbine moving blades (1) during operation of a turbine from prior response data that is distribution data on the vibration response of all the turbine moving blades (1) gained prior to operation start of the turbine; and
processing of predicting, from the operation response data, a turbine moving blade (1) which is one of all the turbine moving blades (1) and on which the maximum vibration response is acting, and magnitude of the maximum vibration response.
